**Europäisches Patentamt**

**European Patent Office**

**Office européen des brevets**

(19)

(11) Numéro de publication : **0 310 461 B1**

# FASCICULE DE BREVET EUROPEEN

(12)

(45) Date de publication du fascicule du brevet :
**01.04.92 Bulletin 92/14**

(51) Int. Cl.⁵ : **B60T 13/74, F16D 65/16**

(21) Numéro de dépôt : **88401938.1**

(22) Date de dépôt : **26.07.88**

(54) **Dispositif générateur de pression pour circuits de freinage de véhicules automobiles.**

(30) Priorité : **04.09.87 FR 8712284**

(43) Date de publication de la demande :
**05.04.89 Bulletin 89/14**

(45) Mention de la délivrance du brevet :
**01.04.92 Bulletin 92/14**

(84) Etats contractants désignés :
**DE ES GB IT**

(56) Documents cités :
**EP-A- 0 025 714**
**DE-A- 2 128 169**
**FR-A- 2 027 604**
**FR-A- 2 561 189**
**GB-A- 2 053 394**
**US-A- 3 047 727**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Sauvageot, Jean-Claude**
**40, rue des Lilas**
**F-92500 Rueil-Malmaison (FR)**
Inventeur : **Merletti, Didier**
**1, rue Jean Lurcat**
**F-78340 Les Clayes sous Bois (FR)**
Inventeur : **Louviot, Jean-François**
**11, rue Sente du Nord**
**F-92310 Sèvres (FR)**

(74) Mandataire : **Ernst-Schonberg, Michel et al**
**REGIE NATIONALE DES USINES RENAULT (S.**
**0267) 8 & 10, avenue Emile Zola**
**F-92109 Boulogne Billancourt Cédex (FR)**

## Description

L'invention concerne un dispositif générateur de pression pour circuits de freinage de véhicules automobiles du type comportant des moteurs électriques de commande d'un moyen générateur de la pression de freinage (voir par example le document EP-A-0 025714).

La publication FR-A-2561189 décrit un dispositif dans lequel chaque frein de roue est équipé d'un moteur électrique relié par une transmission mécanique au piston de commande du frein.

Un tel dispositif nécessite l'emploi de freins spécifiques qui incorporent à la fois le moteur électrique et la transmission mécanique.

L'invention a pour objet un dispositif générateur de la pression de freinage qui comprend pour une roue ou essieu de roues un moteur électrique, une pompe hydraulique entraînée par ledit moteur, génératrice de la pression de freinage et un dispositif capteur d'un paramètre en corrélation avec la force de freinage.

Dans ce but, l'invention propose une solution caractérisée comme dans la seconde partie de la revendication 1.

Selon une caractéristique de l'invention, les écarts entre les valeurs du signal de commande de l'action de freinage et les valeurs du paramètre en corrélation sont traités électroniquement pour chaque roue de manière à délivrer des signaux de commande à chaque moteur électrique.

Le dispositif générateur ainsi réalisé peut ne comporter qu'un seul moteur électrique d'entraînement d'une pompe génératrice de la pression de freinage aux freins d'un même essieu.

Le dispositif possède l'avantage de pouvoir être associé avec des capteurs délivrant des signaux représentatifs de la charge des roues arrière ou de la charge des roues avant.

Par voie de conséquence, il sera possible de réaliser des circuits de freinage sans organes limiteurs, correcteurs ou répartiteurs de la pression de freinage dont la conception est basée sur une valeur moyenne des différents états de charge du véhicule.

Le dispositif possède donc la possibilité de pouvoir être associé par exemple à un capteur spécifique tel qu'un capteur potentiométrique de déplacement qui mesure la distance moyenne entre le plan horizontal de référence du véhicule et l'axe horizontal défini par les centres des roues arrière. Le signal filtré de ce capteur est représentatif de l'état de charge de l'essieu arrière du véhicule. Lorsqu'un tel capteur est associé à un circuit électronique analogique ou numérique, le dispositif permet de modifier en fonction de la charge de l'essieu arrière la répartition de l'effort de freinage entre les deux essieux du véhicule suivant des lois réalisées par l'électronique. On obtient alors au cours du freinage un taux d'adhérence utile de l'adhérence disponible entre la roue et le sol supérieur au taux d'adhérence utilisé par les dispositifs répartiteurs conventionnels de la pression de freinage, quel que soit l'état de charge du véhicule.

Un autre avantage du dispositif est de pouvoir être associé à des capteurs délivrant des signaux représentatifs de la vitesse et de la dérivée de la vitesse des roues et du véhicule dans le but d'obtenir la décélération souhaitée du véhicule en évitant tout risque de blocage intempestif des roues.

L'effort de freinage sur chaque roue est, dans ce cas, avantageusement exploité par l'intermédiaire d'un circuit électronique numérique qui permet le remplacement des systèmes conventionnels d'antiblocage.

L'invention ressortira de la description d'un exemple de réalisation du dispositif faite en référence au dessin annexé dans lequel :

– la figure 1 est une représentation schématique du dispositif associé à divers capteurs,

– la figure 2 est une représentation schématique d'une variante de réalisation du dispositif appliqué à un dispositif de freinage de secours,

– la figure 3 est une représentation schématique du mode d'alimentation des moteurs électrique à partir d'une batterie de secours.

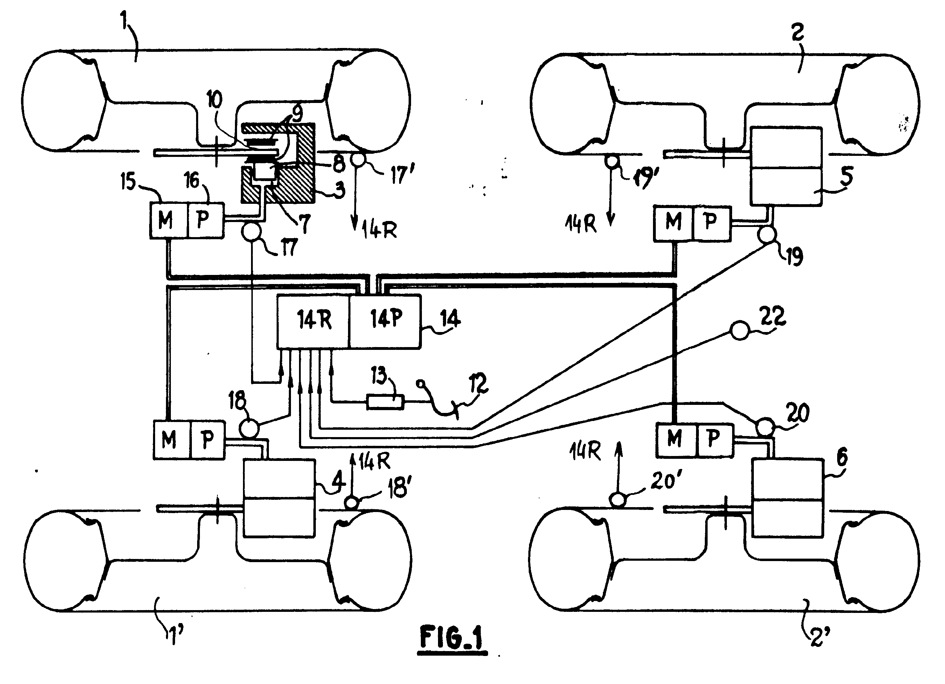

Le dispositif est appliqué à un véhicule de tourisme dont chaque roue avant 1,1' et arrière 2,2' est munie d'un frein 3 à 6 qui possède un cylindre récepteur 7 dans lequel se déplace un piston 8 qui applique les garnitures de friction 9 avec la force nécessaire contre une piste de freinage 10 tournant avec la roue. La figure 1 décrit le dispositif appliqué à un frein à disque mais qui est tout aussi bien applicable à un frein à tambour. A titre de simplification, on a représenté schématiquement le frein de la roue 1. Les autres freins et roues sont représentés par leurs références.

A la pédale de freinage 12 est associé un capteur 13 qui constitue un moyen de mesure qui transmet un signal représentatif de la course ou de la force appliquée à la pédale 12.

Un circuit de traitement 14 à bloc de régulation 14r et bloc de puissance 14p transforme le signal du capteur 13 en des grandeurs (tension ou courant) de commande d'un moteur électrique 15 à courant continu ou alternatif à faible inertie et à faibles pertes par frottement associé à chaque roue 1,1' - 2,2' ou paire de roues d'un même essieu qui entraîne une pompe volumétrique 16 telle qu'une pompe à engrenages dont le canal de sortie est branché sur le cylindre récepteur 7.

Le débit de fluide de la pompe 16 assure, dans un premier temps, le déplacement du piston 8 et, dans un second temps, l'augmentation de la pression dans le cylindre 7.

L'effort de freinage désiré par le conducteur du véhicule est mesuré au niveau de la pédale 12 par le capteur 13.

Ce dernier, réalisable à partir de jauges de contrainte, délivre un signal de commande dirigé vers le bloc de régulation 14r. Mais le bloc de régulation peut également gérer un ou plusieurs paramètres mesurés par des capteurs 17 à 20 délivrant des signaux en corrélation avec la force de freinage de chaque roue. A titre d'exemple, les capteurs 17 à 20 associant des jauges de contrainte à une membrane déformante constituent un capteur de pression. En outre, un capteur 22 délivrera un signal représentatif de la charge de l'essieu arrière. De même, un capteur 17′ à 20′, associé à chaque roue, délivrera un signal représentatif de la vitesse de la roue.

L'ensemble des capteurs 17, 18, 19, 20, 22 délivre de la sorte des signaux en corrélation avec un signal de commande dont les écarts servent à établir la tension ou courant de commande des moteurs 15, de manière à asservir l'effort de freinage de chaque roue à une valeur de consigne donnée par le conducteur.

La valeur de consigne du signal aux bornes du ou des moteurs des roues arrière est contrôlée en fonction de la charge.

Il est à remarquer que le circuit de traitement 14 peut être remplacé par un circuit électronique différent réalisable à partir de composants conventionnels dès que l'on supprime la fonction de contrôle de l'antiblocage des roues du véhicule. Dans le cas contraire, le circuit de traitement 14 sera complété par des capteurs additionnels et par un calculateur qui substituera à la consigne de freinage communiquée par le conducteur une consigne calculée pour chaque moteur à partir de signaux mesurés et de lois de pilotage programmées préalablement mises en mémoire dans le calculateur chaque fois qu'une tendance au blocage sera détectée.

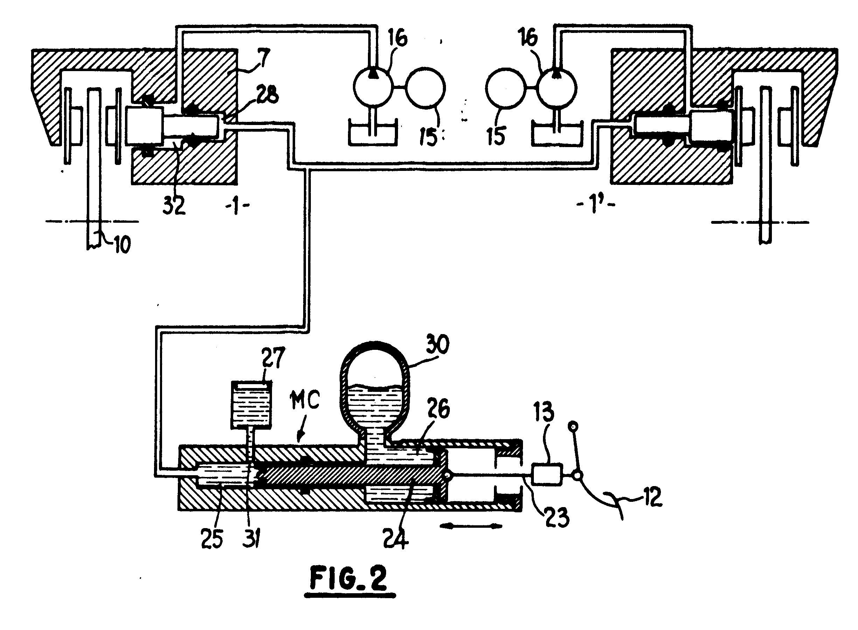

Selon la figure 2, le dispositif générateur de la pression de freinage est appliqué à un circuit de freinage de secours dans lequel la pédale 12 et le capteur 13 sont associés à une tige de poussée 23 dont l'extrémité est attelée à un piston 24 étagé dont les extrémités délimitent deux chambres de pression 25-26 d'un maître-cylindre MC dont l'une est en communication avec un réservoir 27 et la chambre de pression 28 du cylindre 7 et dont l'autre est soumise à la pression fournie par un accumulateur oléopneumatique 30. Le piston 24 porte à son extrémité un obturateur de l'orifice 31 de mise en communication du réservoir 27 avec la chambre 25.

Lorsque le conducteur actionne la pédale 12, le piston 24 comprime le fluide dans la chambre 26 et dans l'accumulateur 30. L'orifice 31 est ouvert et les chambres 25 et 28 du maître-cylindre et des freins sont hors pression.

La pression de freinage est produite par le groupe motopompe 15-16 dans une chambre 32 du cylindre de freinage en fonction du signal émis par le capteur 13 asservi à la pédale.

Dans les conditions de fonctionnement normales, la pression de tarage de l'accumulateur 30 permet l'obtention d'un effort antagoniste au déplacement de la pédale 12. Un dimensionnement convenable du volume de la chambre de l'accumulateur 30, de sa pression de tarage et du volume de la chambre 26 permet d'obtenir la variation désirée de l'effort appliqué à la pédale en fonction de la course de celle-ci.

Par contre, lorsque le dispositif générateur de pression est en panne, le maître-cylindre fournit la pression de freinage directement à partir de la chambre 25 aux chambres 28 des cylindres de freins.

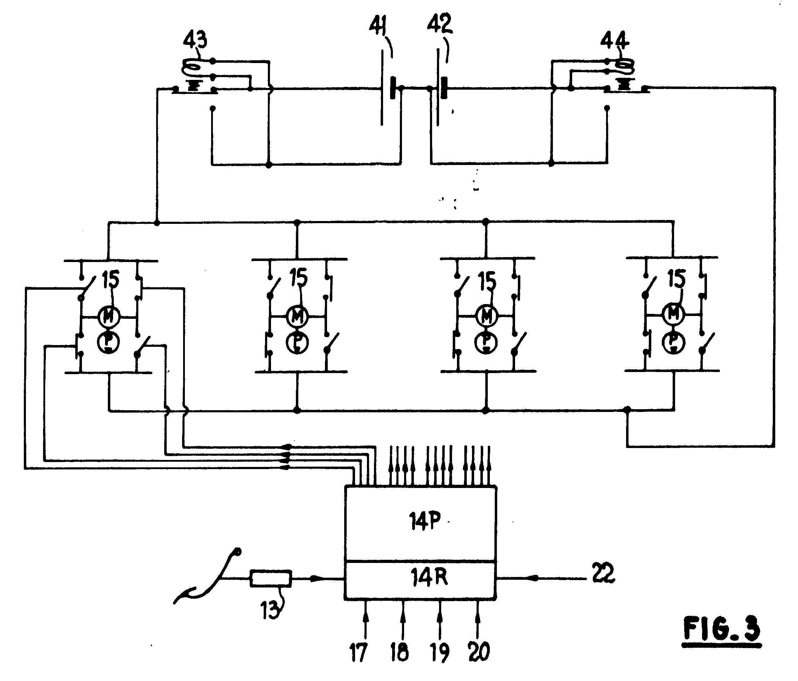

Selon la figure 3, les moteurs 15 à courant continu à excitation permanente du dispositif générateur de la pression de freinage sont alimentés par deux sources de courant électrique 41, 42, montées en série dont chacune fournit la tension de bobine d'un relais 43, 44 à contact de basculement qui assure l'alimentation des moteurs 15 par la ou les sources de courant non défectueuses.

Chaque moteur 15 est alimenté par un système hacheur régulateur de tension à transistors qui permettent l'inversion du sens de marche des groupes motopompe en fonction des signaux de commande générés par le circuit de traitement.

## Revendications

1. Dispositif générateur de pression pour circuits de freinage de véhicules automobiles du type comportant des moteurs électriques (15) de commande d'un moyen générateur (16) de la pression de freinage, caractérisé par le fait que les moteurs électriques (15) associés à chaque roue (1, 1′, 2, 2′) ou paire de roues (1,1′ - 2,2′) d'un même essieu entraînent des pompes volumétriques (16) à deux sens de marche et dans lequel la pression de freinage est produite par le groupe motopompe (15-16) qui assure directement dans un premier temps le déplacement du piston (8) d'application des garnitures de friction (9) des freins (3 à 6) et dans un second temps, l'augmentation de la pression dans le cylindre récepteur (7) dudit piston, tandis qu'un système régulateur (14) assure une régulation de tension et d'inversion du sens de marche des groupes motopompe (15-16) en fonction des signaux de commande générés par un circuit de traitement (14).

2. Dispositif générateur de pression selon la revendication 1, caractérisé par le fait que le circuit de traitement (14) transforme les signaux fournis par des capteurs (17 à 20) délivrant des signaux en corrélation avec la force de freinage et par un capteur (13) de l'effort de commande de freinage.

3. Dispositif générateur de pression selon la revendication 2, caractérisé par le fait que des capteurs (17′ à 20′, 22) génèrent des signaux représentatifs de la charge de l'essieu arrière et/ou de la vitesse des roues.

4. Dispositif selon l'une quelconque des revendications 1 à 3, caractérisé par le fait que la pression de freinage est produite par le groupe motopompe électrique (15-16) dans une chambre (32), du cylindre (7) du frein tandis qu'un maître-cylindre (MC) assure la transmission de l'effort de commande de freinage à une autre chambre (28) du cylindre du frein par suite d'une panne du dispositif.

5. Dispositif selon l'une quelconque des revendications 1 à 3, caractérisé par le fait que les moteurs électriques (15) sont alimentés par deux sources de courant (41, 42) montées en série dont chacune fournit la tension de bobine d'un relais (43, 44) à contact de basculement d'alimentation de l'ensemble des moteurs par l'une et/ou l'autre desdites sources.

## Patentansprüche

1. Druckerzeugungsvorrichtung für Kraftwagenbremskreise, die Elektromotoren (15) zur Steuerung einer Anordnung (16) zur Erzeugung eines Bremsdrucks aufweist, dadurch gekennzeichnet, daß die jedem Rad (1, 1', 2, 2') oder in jedem Radpaar (1, 1' - 2, 2') einer Achse zugeordneten Elektromotoren in zwei Richtungen wirksame Pumpen (16) antreiben, in denen der Bremsdruck durch das Bauteil aus Motor-Pumpe (15-16) erzeugt wird, welcher zuerst eine direkte Verschiebung der die Bremsbeläge (9) der Bremsen (3 bis 6) beaufschlagenden Kolben (8) bewirkt und danach eine Druckerhöhung im Kolbenzylinder (7), wobei ein Steuersystem (14) eine Spannungsregelung und eine Umkehrung der Wirkrichtung der Bauteile aus Motor-Pumpe (15-16) als Funktion der von der Verarbeitungsschaltung (14) stammenden Steuersignale gewährleistet.

2. Druckerzeugungsvorrichtung nach Anspruch 1, dadurch gekennzeichnet, daß die Verarbeitungsschaltung (14) Signale umwandelt, die von Fühlern (17 bis 20) stammen, deren Ausgangssignale mit der Bremskraft korrelieren und die von einem Fühler (13) für die Bremskraft stammen.

3. Druckerzeugungsvorrichtung nach Anspruch 2, dadurch gekennzeichnet, daß die Fühler (16' bis 20', 22) Signale erzeugen in Abhängigkeit der Belastung der Hinterachse und/oder der Geschwindigkeit der Räder.

4. Druckerzeugungsvorrichtung nach einem der Ansprüche 1 bis 3, dadurch gekennzeichnet, daß der Bremsdruck durch das elektrische Bauteil Motor-Pumpe (15-16) in einer Kammer (32) des Bremszylinders (7) erzeugt wird und daß ein Hauptzylinder (MC) die Übertragung der gesteuerten Bremskraft zu einer anderen Kammer (28) des Bremszylinders mittels eines Ventils gewährleistet.

5. Druckerzeugungsvorrichtung nach einem der Ansprüche 1 bis 3, dadurch gekennzeichnet, daß die elektrischen Motoren (15) von zwei Stromquellen (41, 42) gespeist werden, die in Serie geschaltet sind und deren jede die Spule eines zwei-stufigen Schaltrelais (43, 44) mit Spannung beaufschlagt zum Anschluß der Gesamtheit der Motoren an die eine und/oder andere Stromquelle.

## Claims

1. Pressure generator device for motor vehicle brake circuits of the type comprising electric motors (15) controlling a braking pressure generator means (16), characterized in that the electric motors (15) associated with each wheel (1, 1', 2, 2') or pair of wheels (1, 1'- 2, 2') of a same axle drive positive displacement vacuum pumps (16) in two operating directions and in which the braking pressure is produced by the motor pump unit (15-16) which initially directly ensures the displacement of the piston (8) applying the friction linings (9) of the brakes (3 to 6) and subsequently ensures the pressure increase in the cylinder (7) receiving this piston, while a regulator system (14) ensures the regulation of voltage and inversion of the direction of operation of the motor pump units (15-16) as a function of the control signals generated by a processing circuit (14).

2. Pressure generator device as claimed in claim 1, characterized in that the processing circuit (14) converts the signals supplied by sensors (17 to 20) supplying signals correlated with the braking force and by a sensor (13) of the braking control force.

3. Pressure generator device as claimed in claim 2, characterized in that sensors (17' to 20', 22) generate signals representing the load on the rear axle and/or the speed of the wheels.

4. Device as claimed in any one of claims 1 to 3, characterized in that the braking pressure is produced by the electric motor pump unit (15-16) in a chamber (32) of the cylinder (7) of the brake while a master cylinder (MC) ensures the transmission of the braking control force to a further chamber (28) of the brake cylinder following a breakdown of the device.

5. Device as claimed in any one of claims 1 to 3, characterized in that the electric motors (15) are supplied by two current sources (41, 42) disposed in series, each of which supplies the coil voltage of a trip contact relay (43, 44) supplying all the motors from one and/or the other of these sources.

**FIG.1**

EP 0 310 461 B1

**FIG.2**

EP 0 310 461 B1

FIG.3

EP 0 310 461 B1